# FASCICULE DE BREVET EUROPEEN

(11) **EP 0 402 225 B1**
(45) Date de publication et mention de la délivrance du brevet: **03.02.1993**
(21) Numéro de dépôt: 90401502.1
(22) Date de dépôt: 05.06.1990
(51) Int. Cl.: B67C 7/00, B65G 47/84

(54) **Dispositif de transport de récipients, tels que des bouteilles**
Fördereinrichtung für Behälter, wie Flaschen
Conveying device for containers such as bottles

(30) Priorité: 09.06.1989 FR 8907637
(43) Date de publication de la demande: 12.12.1990
(73) Titulaire: LA GIRONDINE S.A., F-33491 Le Bouscat Cédex (FR)
(72) Inventeur: Bedin, Jean, F-33491 Le Bouscat Cédex (FR)
(74) Mandataire: Bloch, Gérard

(56) Documents cités:
- EP-A- 0 182 708
- FR-A- 1 591 106
- FR-A- 2 370 682

## Description

La présente invention concerne les dispositifs destinés à transporter des objets d'une station de traitement à une autre, les opérations effectuées aux deux stations étant distinctes et complémentaires et exigeant des temps de traitement différents. C'est le cas notamment des opérations de remplissage et de bouchage des bouteilles.

Dans ce domaine d'application, on a été conduit à prévoir, au poste de remplissage, un appareil tournant muni d'une pluralité de becs de tirage et animé d'un mouvement de rotation continu, pour éviter notamment les mouvements d'oscillation du liquide en surface des bouteilles, et des moyens de transfert commodes des récipients du poste de remplissage à un poste fixe de bouchage.

Un dispositif de ce type est connu et a été commercialisé par les Etablissements Larrieu-La Girondine (France) notamment sous les noms de groupes Bretagne et Anjou. Il comporte une chaîne, ou transporteur, sans fin sur laquelle reposent libres des supports de récipients qui, après être passés sous les becs de remplissage, ou tirage, sont acheminés par la chaîne sous le poste unique de bouchage, occupant une position fixe et la chaîne porteuse des supports étant animée d'un mouvement continu, un moyen élévateur soulève le support porteur d'un récipient rempli quand il passe sous l'organe de bouchage et le redépose sur la chaîne, après bouchage.

Dans ce dispositif connu, les supports de récipients reposent entre des taquets poussoirs fixés à la chaîne et, après bouchage, les récipients sont redéposés dans l'espace libre existant entre le taquet qui le poussait et le support précédent.

On voit que, dans ce dispositif connu, les supports doivent être écartés d'au moins un support, c'est-à-dire que les postes de tirage doivent être écartés au moins du double de ce qui est nécessaire pour la seule opération de tirage. De ce fait, la vitesse d'entraînement de la chaîne est deux fois plus forte que nécessaire et surtout l'augmentation des distances entraîne une augmentation des dimensions des pièces associées, par exemple des cuves de tirage, donc une augmentation des coûts de fabrication.

La présente invention vise notamment à supprimer ces inconvénients et elle a pour objet un dispositif de type connu, c'est-à-dire un dispositif de transport de récipients, tels que des bouteilles, arrivant par un transporteur d'amenée, d'un poste de traitement à au moins un autre, et qui comporte un moyen d'acheminement sans fin par exemple une chaîne ou bande sans fin sur laquelle reposent, libres, les récipients, qu'il fait passer par un premier poste de traitement puis par au moins un second poste de traitement, un premier moyen d'indexage des récipients étant agencé pour déposer successivement, un par un, les récipients arrivant par le transporteur d'amenée sur ledit moyen d'acheminement sans fin, caractérisé par le fait que ledit moyen d'acheminement sans fin est lisse et qu'il est prévu un second moyen d'indexage agencé pour amener successivement, un par un, au premier poste de traitement les récipients déposés sur ledit moyen d'acheminement sans fin, lesdits premier et second moyens d'indexage étant synchronisés avec le mouvement des organes actifs du premier poste de traitement.

Par raison de simplicité d'exposé, le moyen d'acheminement sans fin sera désigné, par la suite, sous l'appellation "chaîne sans fin" qui est la forme sous laquelle il est le plus souvent réalisé.

Fréquemment, les récipients à traiter doivent être orientés; c'est le cas, en particulier des bouteilles pour les opérations telles que l'étiquetage. Dans ce cas, il est de préférence prévu, pour recevoir les récipients, des supports, ou godets, libres sur la chaîne lisse et le premier moyen d'indexage dépose chaque récipient sur un support amené par la chaîne lisse et le second moyen amène au premier poste de traitement ledit récipient sur et avec ledit support.

Dans le cas d'application aux bouteilles, le premier poste de traitement est, en principe, un poste de remplissage, ou tirage, animé d'un mouvement de rotation continu et muni d'une pluralité de becs de tirage, et les moyens de sélection sont, en général, des étoiles rotatives, les trois éléments rotatifs, à savoir le poste de tirage et les deux étoiles, étant entraînés en synchronisme.

Les deux premières étoiles de sélection peuvent, par exemple, être montées superposées sur un arbre commun, entraîné par le mécanisme de commande du premier poste. Ce pourrait aussi être la même étoile qui assure les deux indexages.

On voit que la vitesse de la chaîne lisse peut être choisie à volonté, en étant toutefois au moins égale à celle qui correspond au pas d'entrée du premier moyen d'indexage. Il n'y a aucune précision à exiger de l'acheminement des supports pourvu qu'ils soient en nombre suffisant sur la chaîne.

Quand le dispositif fonctionne sans supports de récipients, ceux-ci reposant directement sur la chaîne lisse, le transporteur d'amenée sera alors réglable en hauteur, pour permettre le passage des récipients à la sélection et au premier moyen d'indexage.

L'invention prévoit encore de préférence de munir les supports, ou godets, d'une empreinte, par exemple de forme carrée, permettant l'orientation des récipients, par exemple pour l'étiquetage des bouteilles porteuses de repérages.

Les supports, ou godets, peuvent être dotés de rondelles de réduction convenables et ils offrent, alors, l'avantage, sur les machines où sont prévues une multiplicité d'opérations, telles que tirage, bouchage, capsulage, étiquetage, etc. de traiter des récipients de dimensions différentes, sans avoir à changer tout le système d'indexage de la machine.

Le dispositif selon l'invention se prête bien au traitement des bouteilles, notamment devant subir, après le remplissage, plusieurs opérations telles que nivelage, bouchage, capsulage, sertissage etc., les différents postes de traitement se succèdant, à volonté, le long de la chaîne lisse et permettant ainsi de disposer d'une machine évolutive et modulable.

De préférence l'invention prévoit même d'associer deux postes, dont les traitements sont synchronisés, par exemple bouchage et capsulage, ou sertissage, en prévoyant un seul et même élément de manoeuvre des organes de traitement, par exemple un bras horizontal s'étendant au-dessus des deux moyens d'indexage correspondants, synchronisés et situés en deux points espacés de la chaîne. D'autres postes de traitement peuvent alors être prévus sur la portion de chaîne comprise entre la sortie d'un des moyens d'indexage synchronisé et l'entrée de l'autre moyen.

Ces deux moyens d'indexage peuvent d'ailleurs être confondus en un seul ou être reliés par un organe d'entraînement commun.

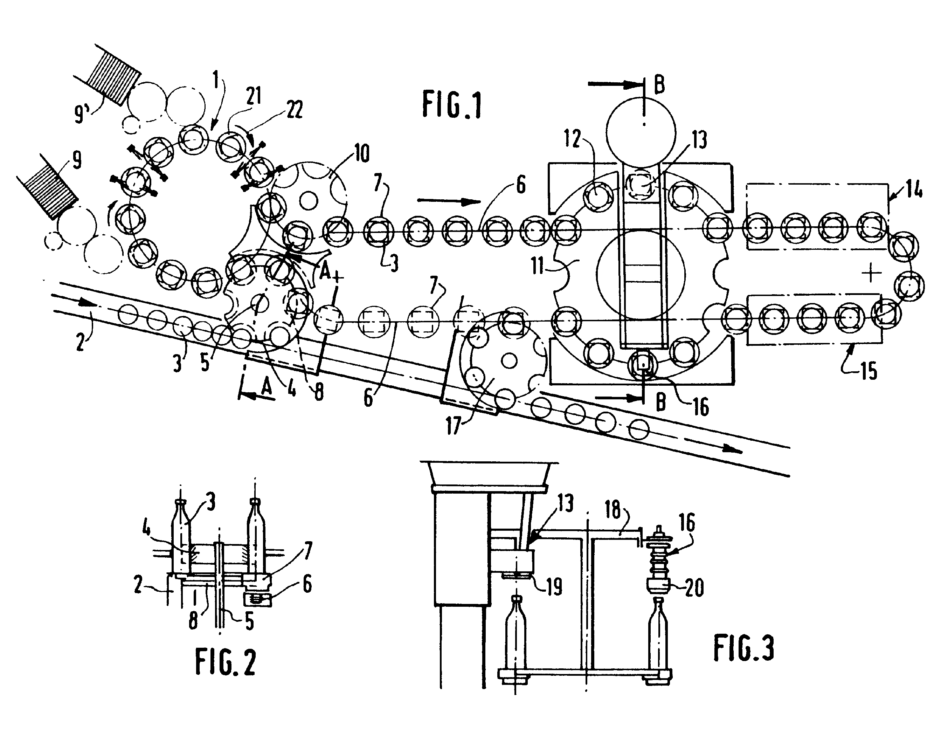

A titre nullement limitatif, on a représenté au dessin annexé une machine de traitement multiple des bouteilles, à chaîne sans fin lisse, selon l'invention, dessin sur lequel
la fig. 1 est une vue de dessus, schématique, d'ensemble de la machine,
la fig. 2 est une vue schématique, en coupe selon la ligne A-A de la fig. 1, et
la fig. 3 est une vue schématique en coupe selon la ligne B-B de la fig. 1.

Dans l'exemple représenté, l'invention est appliquée à une machine combinée de remplissage, étiquetage, nivelage, bouchage et capsulage (ou sertissage) de bouteilles.

Le remplissage, ou tirage, s'opère sur un carrousel 1 (représenté comme une chaîne sans fin par un simple cercle), animé d'un mouvement de rotation continu, sous des becs de tirage (non représentés).

Une bande transporteuse 2 amène les bouteilles 3 à l'entrée d'une étoile d'indexage 4 montée rotative sur l'axe 5. Sur une chaîne sans fin 6 lisse, reposent libres des godets 7 en nombre quelconque, ici très supérieur au nombre des becs du poste de tirage 1. Sous l'étoile de sélection 4 des bouteilles 3, est clavetée sur l'axe 5 une étoile 8 de sélection des godets 7 amenés par la chaîne 6, les deux étoiles 4 et 8 étant synchronisées avec le carrousel 1 du poste de tirage.

Chaque bouteille 3, sélectionnée par l'étoile 4, se dépose sur un godet 7, sélectionné par l'étoile 8, et l'ensemble, bouteille sur godet, vient prendre place sous un bec de tirage du carrousel 1.

Associés au poste de tirage 1 sont prévus des postes 9 et 9′ d'étiquetage et de contre-étiquetage. A la sortie du poste de tirage 1, une étoile 10 libère, un par un, sur la chaîne 6, les godets 7 porteurs d'une bouteille 3 remplie et étiquetée.

La chaîne 6 amène alors les bouteilles, ou godets, à une étoile d'indexage 11 qui les fait passer sous un poste de nivelage 12, puis sous un poste de bouchage liège 13. A la sortie de l'étoile 11, la chaîne 6 fait passer les bouteilles (avec leur godet) par un poste 14 de distribution de capsules) puis éventuellement au travers d'un tunnel de rétraction 15 et les ramène à l'entrée de la même étoile d'indexage 11. Celle-ci les fait passer sous un poste de capsulage 16 (ou sertissage).

A la sortie de l'étoile 11, les bouteilles 3, sur leur godet 7, sont libérées sur la chaîne 6 et amenées par celle-ci à l'entrée d'une étoile d'indexage 17 qui ramène, une par une, les bouteilles 3 sur le transporteur 2 assurant leur évacuation. Les godets 7 continuent leur mouvement vers l'étoile de sélection 8, et suivent à nouveau le trajet décrit ci-dessus.

Tous les éléments connus du dispositif, à savoir notamment, le carrousel de tirage, les postes d'étiquetage, de nivelage, de bouchage, de distribution de capsules, de rétraction, de capsulage (ou sertissage), les étoiles d'indexage, les transporteurs et la chaîne sans fin, n'ont été représentés que schématiquement et n'ont pas été décrits.

Il y a lieu toutefois de préciser qu'il a été prévu ici de monter aux extrémités d'un même arbre horizontal 18, montant et descendant, les organes actifs 19 et 20 respectifs du poste de bouchage 13 et du poste de capsulage (ou sertissage) 16 permettant ainsi d'effectuer simultanément ces deux opérations sur deux bouteilles différentes.

Il est prévu également ici de doter les godets 7 de petites empreintes carrées 21 qui permettent d'assurer leur orientation en permanence, comme indiqué schématiquement par les petites flèches 22.

Les godets 7 peuvent être munis intérieurement de petites rondelles de réduction, et permettre ainsi de traiter des bouteilles de diamètres différents allant, de 5 mm en 5 mm par exemple, sans avoir à changer le système d'indexage du dispositif.

Le moyen d'acheminement sans fin, lisse, utilisé dans l'exemple de réalisation représenté est une chaîne continue. Il pourrait être constitué par deux bandes lisses sans fin distinctes sur les brins supérieurs respectifs desquels reposent les godets et dont les extrémités sont reliées entre elles par un bras pivotant de transfert de godets d'une chaîne à l'autre.

## Revendications

1. Dispositif de transport de récipients, tels que des bouteilles, arrivant par un transporteur d'amenée (2), d'un poste de traitement à au moins un autre, et qui comporte un moyen d'acheminement sans fin (6), sur lequel reposent, libres, les récipients (3), qu'il fait passer par un premier poste de traitement (1) puis par au moins un second poste de traitement (13),un premier moyen d'indexage (4) des récipients étant agencé pour déposer successivement, un par un, les récipients arrivant par le transporteur d'amenée (2) sur ledit moyen d'acheminement sans fin (6),caractérisé par le fait que ledit moyen d'acheminement sans fin(6)est lisse et qu'il est prévu un second moyen d'indexage (8) agencé pour amener successivement, un par un, au premier poste de traitement (1) les récipients déposés sur ledit moyen d'acheminement sans fin (6), lesdits premier(4) et second (8) moyens d'indexage étant synchronisés avec le mouvement des organes actifs du premier poste de traitement (1).

2. Dispositif selon la revendication 1, dans lequel il est prévu une pluralité de supports montés coulissant librement sur le moyen d'acheminement lisse, le premier moyen d'indexage étant agencé pour déposer chaque récipient sur un desdits supports et le second moyen d'indexage est agencé pour amener ledit récipient sur et avec son support au dit premier poste de traitement.

3. Dispositif selon la revendication 2, dans lequel les dits supports portent des empreintes d'orientation des récipients.

4. Dispositif selon l'une des revendications 1 à 3, dans lequel les deux moyens d'indexage sont groupés en un seul moyen double, d'axe de rotation unique.

5. Dispositif selon l'une des revendications précédentes, dans lequel, sur la trajectoire du moyen d'acheminement sans fin, sont prévus deux postes dont les traitements sont synchronisés et dont les organes actifs sont manoeuvrés par un seul élément, les deux organes d'indexage correspondants étant également synchronisés et situés en deux points espacés de la chaîne.

6. Dispositif selon la revendication 5, dans lequel il est prévu des postes de traitement sur la portion du moyen d'acheminement comprise entre la sortie d'un des deux organes d'indexage et l'entrée de l'autre organe.

## Patentansprüche

1. Vorrichtung zur Beförderung von auf einem Zubringerband (2) eintreffenden Behältern wie Flaschen von einer Arbeitsstation zu mindestens einer anderen, die eine Endlos-Fördereinrichtung (6) umfaßt, auf der die Behälter (3) frei stehen, welche diese an einer ersten Arbeitsstation (1) und anschließend an mindestens einer zweiten Arbeitsstation (13) vorbeiführt, sowie ein erstes Mittel zum Indexvorschub (4) der Behälter, welches vorgesehen ist, um die Behälter, die auf dem Zubringerband (2) eintreffen, nacheinander einzeln auf die genannte Endlos-Fördereinrichtung (6) zu stellen, dadurch gekennzeichnet, daß die Endlos-Fördereinrichtung (6) eben ist und daß ein zweites Mittel zum Indexvorschub (8) vorgesehen ist, um die auf der Endlos-Fördereinrichtung (6) abgestellten Behälter nacheinander und einzeln der ersten Arbeitsstation zuzuführen, wobei diese ersten (4) und zweiten (8) Mittel zum Indexvorschub mit der Bewegung der aktiven Organe der ersten Arbeitsstation (1) synchronisiert sind.

2. Vorrichtung nach Anspruch 1, bei der eine Vielzahl von Haltern vorgesehen sind, die frei verschiebbar auf der ebenen Fördereinrichtung angeordnet sind, wobei das erste Mittel zum Indexvorschub vorgesehen ist, um jeden Behälter auf einen dieser Halter zu stellen, und das zweite Mittel zum Indexvorschub vorgesehen ist, um den Behälter auf und mit seinem Halter der genannten ersten Arbeitsstation zuzuführen.

3. Vorrichtung nach Anspruch 2, bei der die Halter Vertiefungen zur Ausrichtung der Behälter aufweisen.

4. Vorrichtung nach einem der Ansprüche 1 bis 3, bei der die Mittel zum Indexvorschub in einer einzigen Doppeleinrichtung mit einer alleinigen Rotationsachse zusammengeschlossen sind.

5. Vorrichtung nach einem der vorhergehenden Ansprüche, bei der auf der Bahn der Endlos-Fördereinrichtung zwei Stationen vorgesehen sind, deren Arbeitsabläufe synchronisiert sind und deren aktive Organe von einem einzigen Element gesteuert werden, wobei die zwei entsprechenden Organe zum Indexvorschub ebenfalls synchronisiert sind und sich an zwei voneinander beabstandeten Punkten der Kette befinden.

6. Vorrichtung nach Anspruch 5, bei der Arbeitsstationen an dem Teil der Fördereinrichtung vorgesehen sind, der zwischen dem Ausgang eines der beiden Organe zum Indexvorschub und dem Eingang des anderen Organs liegt.

## Claims

1. Device for transporting containers, such as bottles arriving on a feed conveyor (2), from one processing station to at least one other, and which comprises an endless conveying means (6) on which the containers (3) freely rest, which are then led through a first processing station (1), then through at least a second processing station (13), a first means (4) for indexing the containers being adapted so as to set the containers arriving by the feed conveyor (2) successively, one by one, down on said endless conveying means (6), characterized in that said endless conveying means (6) is smooth and a second indexing means (8) is provided adapted for bringing the containers deposited on said endless conveying means (6) successively, one by one, to the first processing station (1), said first (4) and second (8) indexing means being synchronised with the movement of the active members of the first processing station.

2. Device according to claim 1, wherein a plurality supports are provided, freely sliding on the smooth conveying means, and the fist indexing means being adapted for depositing each container on one of said supports and the second means is adapted for bringing said container on and with its support to said first processing station.

3. Device according to claim 2, wherein said supports have impressions for orienting the containers.

4. Device according to one of claims 1 to 3, wherein the two indexing means are combined into a single double means, with a single axis of rotation.

5. Device according to one of the preceding claims wherein, in the path of the endless conveying means, two stations are provided whose processing operations are synchronised and whose active members are controlled by a single element, the two corresponding indexing members being also synchronised and situated at two spaced apart points of the chain.

6. Device according to claim 5, wherein processing stations are provided on the portion of the conveying means between the outlet of one of the two indexing members and the inlet of the other member.
